# EUROPÄISCHE PATENTANMELDUNG

(11) **EP 3 118 228 A1**
(43) Veröffentlichungstag der Anmeldung: **18.01.2017**
(21) Anmeldenummer: 15176655.7
(22) Anmeldetag: 14.07.2015
(51) Int. Cl.: C08F 132/00, C08F 4/619, C08F 4/70, C08F 6/00, C08G 61/06

(54) **VERFAHREN ZUR HERSTELLUNG VON POLYALKENAMEREN FÜR VERPACKUNGSANWENDUNGEN**

(71) Anmelder: Evonik Degussa GmbH, 45128 Essen (DE)
(72) Erfinder: Wursche, Roland, 48249 Dülmen (DE); Herwig, Jürgen, 46569 Hünxe (DE)

(57) **Zusammenfassung**

Die vorliegende Erfindung betrifft ein Verfahren zur Herstellung von Cycloalkenamer-haltigen Zusammensetzungen sowie derartige Cycloalkenamer-haltigen Zusammensetzungen. Die Erfindung betrifft weiterhin die Verwendung dieser Cycloalkenamer-haltigen Zusammensetzungen auf dem Gebiet von Verpackungsmaterialien, insbesondere für Lebensmittel.

## Beschreibung

Die vorliegende Erfindung betrifft Polyalkenamer-haltige Zusammensetzungen sowie ein Verfahren zu ihrer Herstellung. Die Erfindung betrifft weiterhin die Verwendung von Polyalkenamer-haltigen Zusammensetzungen auf dem Gebiet von Verpackungsmaterialien, insbesondere für Lebensmittel.

Zur Erhöhung der Lebensdauer verpackter Lebensmittel kann das Prinzip der aktiven Sauerstoffbarriere angewendet werden. Dies bedeutet, dass neben den üblichen passiven Barriereschichten wie zum Beispiel Polyamid 6, Polyethylenterephthalat oder Ethylen-Vinylalkohol-Copolymer zusätzliche "aktive" Komponenten in der Verpackung eingesetzt werden, die Sauerstoff durch chemische Reaktion (Oxidation) binden. Dies kann sich einerseits auf Sauerstoff beziehen, der im Inneren einer Verpackung präsent ist (Restsauerstoff in Modified Atmosphere Packaging- (MAP-)Verpackungen), zum anderen auf Sauerstoff, der im Laufe der Zeit durch die Passiv-Barriere in die Verpackung diffundiert. Dabei kann die "aktive" Komponente in unterschiedlichen Bereichen der Verpackung vorhanden sein, beispielsweise kann sie Teil einer separaten Schicht eines mehrschichtigen Verpackungssystems sein oder auch direkt in die oben genannte passive Barriereschicht eingebracht werden. Durch die chemische Reaktion mit der zusätzlichen "aktiven" Komponente wird eine chemische Reaktion des Sauerstoffs mit z.B. Inhaltsstoffen der verpackten Lebensmittel (Fette, Vitamine, etc.) oder auch das aerobe Bakterien- und Schimmelwachstum gemindert, so dass die Qualität der Lebensmittel länger erhalten bleibt. Dies wiederum ergibt Vorteile, da weniger Lebensmittel vor dem Verkauf bzw. beim Konsumenten verderben und so in verschiedener Hinsicht Ressourcen geschont werden. Darüber hinaus brauchen Lebensmitteln weniger oder gar keine Konservierungsstoffe zugesetzt werden. Üblicherweise enthält die aktive Komponente eine leicht oxidierbare organische Verbindung, daneben weitere Bestandteile wie Metallsalze als Katalysatoren oder auch Photoinitiatoren. Als oxidierbare Verbindung für diesen Zweck werden beispielsweise Polyoctenamere vorgeschlagen, siehe beispielsweise EP2017308A1, WO9407944A1, WO9407379A1 und WO9806779A1.

Die Herstellung von Polyoctenamer ist literaturbekannt, siehe beispielsweise US2013/172635, und sie folgt dem Prinzip der sogenannten Metathese-Polymerisation. Es ist ferner bekannt, dass Polyoctenamer, wie auch andere Metathese-Polymerisate, beginnend mit dem Monomer, einen Anteil von niedermolekularen cyclischen Verbindungen (Oligomere) enthalten (siehe A. Dräxler in Handbook of Elastomers, 2nd edition, 697-722, 2001). Diese Moleküle sind bis zu einem bestimmten Molekulargewicht relativ mobil, d.h. gehen in die Gasphase über und führen aufgrund ihrer Geruchsaktivität zu einem unvorteilhaften Geruch von Verpackungsmaterialien. Ferner sind sie aufgrund ihrer Polarität fettlöslich, so dass ein Übertreten in das verpackte Gut denkbar ist. Auf Grund dieser Eigenschaften besitzen die metathetisch hergestellten Polymere eine beschränkte Einsatzmöglichkeit in Verpackungsanwendungen, d.h. wichtige Anwendungsbereiche bleiben sogar verschlossen, speziell im Sinne einer Nutzung von Polyoctenameren als Bestandteil einer Verpackung, die eine "aktive Sauerstoffbarriere" enthält. Eine Extraktion von niedermolekularen cyclischen Verbindungen aus Polyoctenameren mit Aceton oder Isopropanol ist in der Literatur beschrieben, siehe A. Dräxler in Handbook of Elastomers, 2nd edition, 697-722, 2001. Auch die EP2017308A1 beschreibt entsprechende Extraktionen mit diversen Lösungsmitteln.

Die Ring-öffnende, metathetische Polymerisation (ROMP = Ring Opening Metathesis Polymerisation) von Cycloalkenen ist an sich bekannt (Olefine Metathesis and Metathesis Polymerization, K. J. Irvin, J. C. Mol, Academic Press 1997; Handbook of Metathesis, Vol. 1-3, R. H. Grubbs, Wiley-VCH 2003). Diese Reaktion wird durch eine Reihe von Übergangsmetallen bzw. deren Verbindungen katalysiert, wobei oft ein Co-Katalysator eingesetzt wird, der zusammen mit dem Übergangsmetall bzw. der zugesetzten Übergangsmetallverbindung in einer Reaktion die katalytisch aktive Übergangsmetall-Spezies bildet. Als Co-Katalysatoren eigenen sich v. a. Aluminium- und Zinn-organyle.

Andere Katalysatorsysteme basieren auf definierten Übergangsmetallkomplexen. Zu den bekanntesten Verbindungen gehören Komplexe auf Basis von Ruthenium (Weskamp, T., Kohl, F. J., Herrmann, W. A. J. Organomet. Chem. 1999, 582, 362-365; Weskamp, T., Kohl, F. J., Hieringer, W., Gleich, D., Hermann, W. A. Angew. Chem. Int. Ed. 1999, 38, 2416-2419; Nguyen, S. T., Johnson, L. W., Grubbs, R. H., Ziller, J. W., J. Am. Chem. Soc. 1992, 114, 3974-3975; Bielawski, C. W., Grubbs, R. H., Angew. Chem. Int. Ed. 2000, 39, 2903-2906). Ein Nachteil besteht hier allerdings in ihrem hohen Preis und vor allem in der schwierigen Abtrennung vom Reaktionsprodukt. Reste an Ruthenium führen zu einer oft nicht zu akzeptierenden Färbung des Produktes. Das Polymer muss in diesen Fällen durch aufwändige Verfahren, wie z.B. Umfällen, gereinigt werden, was einer ökonomischen Herstellung entgegensteht.

Die Eigenschaften des resultierenden Polymers können über Parameter wie Temperatur, Konzentration an Monomer, Katalysatorkonzentration und Reaktionszeit eingestellt werden. Das Molekulargewicht lässt sich über den Zusatz von Reglern steuern, deren Aufgabe der Kettenabbruch der wachsenden Kette ist. Da es sich um einen statistischen Prozess handelt, verhält sich das Molekulargewicht in erster Näherung reziprok zur Konzentration an Regler. Eine Verbreiterung der Molekulargewichtsverteilung als Folge der Sekundärmetathese (Kettenübertragung bzw. "back-biting") ist hier nicht berücksichtigt. So lässt sich durch Zugabe von Reglern zwar das gewichtsmittlere Molekulargewicht, nicht aber die Breite der Molekulargewichtsverteilung beeinflussen. Es kommt im weiteren Verlauf der Reaktion zu einer Sekundärmetathese, bei der an dem aktiven Ende einer wachsenden Kette nicht ein weiteres Monomermolekül anlagert, sondern eine bereits bestehende Polymerkette. Das Ergebnis ist eine Kettenübertragung, wodurch die Uneinheitlichkeit bzw. Polydispersität (ausgedrückt als (M_{w}/Mₙ)-1 bzw. M_{w}/Mₙ) zunimmt. Eine weitere Beobachtung bei fortschreitender Reaktion ist die Verschiebung des cis-/trans-Verhältnisses zugunsten der trans-Konfiguration. Hierbei handelt es sich um einen Effekt, der sich ebenfalls auf die Sekundärmetathese zurückführen lässt. Um bestimmte Eigenschaften im Polymer einzustellen, bedarf es also der genauen Steuerung verschiedenster Verfahrensparameter.

Die Polymerisation von Cycloalkenen durch ROMP stellt ein wichtiges Verfahren zur Herstellung von Polyalkenameren dar. Ein Beispiel hierfür ist die Polymerisation von Cycloocten zu Polyoctenamer (bspw. VESTENAMER® der Firma Evonik Industries, DE). In der Regel wird das Polyalkenamer als Feststoff eingesetzt; für manche Anwendungen ist es allerdings erforderlich, dass das Polymer in einem bei Raumtemperatur flüssigen Zustand vorliegt. Eine wichtige Anwendung für Polyalkenamere ist der Einsatz in Verpackungen, beispielsweise in Verpackungsfolien, um die Barriereeigenschaften der Folie insbesondere bezüglich Sauerstoff aber auch anderer Substanzen, beispielsweise CO₂ oder Wasser, zu verbessern. Insbesondere werden die Barriere-Eigenschaften durch die chemische Bindung von Sauerstoff durch das Polyalkenamer verbessert (aktive Barrierewirkung). Dabei wird dem Polyalkenamer in der Regel eine Übergangsmetallverbindung zugegeben, die die Reaktion des Polyalkenamers mit Sauerstoff beschleunigt (EP2017308A1).

Bei der Polymerisierung der Cycloalkene verbleiben Monomere und Oligomere des Monomers im erhaltenen Produktgemisch. Untersuchungen haben gezeigt, dass insbesondere diese Verbindungen eine erhöhte Geruchsaktivität aufweisen. Mehrere Autoren berichten, dass die Geruchsaktivität unter anderem mit der molaren Masse in Zusammenhang steht. Derartige Geruchsstoffe (Odor Active Organic Compounds, OVOC) weisen je nach Quelle Molmassen von nicht mehr als 350 g/mol oder weniger als 300 g/mol auf, um hinreichend flüchtig und als Geruch wahrnehmbar zu sein (M. Schlegelmilch, Geruchsmanagement: Methoden zur Bewertung und Verminderung von Geruchsemissionen,Hamburger Berichte 32 der Technischen Universität Hamburg-Harburg, Verlag Abfall aktuell 2009, ISBN 978-3-9810064-9-0; M. Schön, R. Hübner, Geruch - Messung und Beseitigung, Vogel Verlag Würzburg, 1. Auflage 1996, ISBN 3-8023-1561-8; Umweltbundesamt, Innenraumlufthygiene-Kommission des Umweltbundesamtes, Leitfaden für die Innenraumhygiene in Schulgebäuden, Seite 47, 2008; G. Scharfenberger, Papier + Kunststoff-Verarbeiter 10, 1990).

Es stellte sich nun die Aufgabe, ein Verfahren zur Herstellung Polyalkenamer-haltiger Zusammensetzungen zur Verfügung zu stellen, das in Produkten mit verringerter Geruchsaktivität resultiert. Im Vergleich zu den Methoden des Standes der Technik sollten Polymere mit einem geeigneten reduzierten Monomeren- und Oligomerengehalt in kürzerer Zeit erhalten werden. Der Nachweis der höheren Extraktionsgeschwindigkeit erfolgt über eine vergleichende Untersuchung mittels TDS GC-MS (TDS = Thermodesorption).

Die Polyalkenamer-Verbindungen sollten eine mindestens gleichbleibende aktive Barrierewirkung (beispielsweise gleichbleibende Wirkung bei der chemischen Bindung von Sauerstoff) aufweisen. Dadurch sollte eine Verwendung im Lebensmittelbereich gewährleistet werden.

Die Aufgabe wurde dadurch gelöst, dass in das Verfahren ein Extraktionsschritt unter Verwendung von bestimmten Lösungsmittelgemischen integriert wurde, welcher insbesondere in einem bestimmten Temperaturbereich durchgeführt wird.

Die Aufgabe wurde demgemäß gelöst durch ein Verfahren zur Herstellung einer Polyalkenamerhaltigen Zusammensetzung, umfassend die Schritte:
a) Umsetzen mindestens eines Cycloalkens durch ringöffnende, metathetische Polymerisation unter Erhalt einer Polyalkenamer-haltigen Produktmischung, und
b) Aufarbeiten der Produktmischung zur Entfernung der Monomere und der Oligomere der Cycloalkene unter Erhalt der Polyalkenamer-haltigen Zusammensetzung,
wobei Schritt b) durch Extraktion in einem Lösemittelgemisch umfassend mindestens ein Lösemittel 1 und mindestens ein Lösemittel 2 erfolgt, wobei der Lösungsparameter δ der Lösemittel 1 maximal 9,8 (cal/cm³)^{1/2} und der Lösungsparameter δ der Lösemittel 2 mindestens 9,9 (cal/cm³)^{1/2} betragen. Der Lösungsparameter der Lösemittel 1 beträgt vorzugsweise maximal 9,7 (cal/cm³)^{1/2}, bevorzugt maximal 9,5 (cal/cm³)^{1/2} und besonders bevorzugt maximal 9 (cal/cm³)^{1/2}, ganz besonders bevorzugt maximal 8,5 (cal/cm³)^{1/2} und insbesondere maximal 8 (cal/cm³)^{1/2}.

Oligomere im Sinne dieser Erfindung umfassen insbesondere das Dimer, das Trimer und das Tetramer des eingesetzten Cycloalkens. Polyalkenamere im Sinne dieser Erfindung sind Polymere aus Cycloalkenen, die mindestens fünf Cycloalken-Monomerbausteine umfassen.

Es ist bevorzugt, dass die Summe aus Monomer, Dimer, Trimer und Tetramer (Verunreinigungen) in der Polyalkenamer-haltigen Zusammensetzung weniger als 20000 ppm, bezogen auf das Gesamtgewicht der Zusammensetzung, beträgt. Besonders bevorzugt sind weniger als 10000 ppm, ganz besonders bevorzugt weniger als 2500 ppm und insbesondere weniger als 1000 ppm an Verunreinigungen enthalten.

Die Di-, Tri- und Tetramere werden folgendermaßen quantitativ bestimmt:
Probenvorbereitung: Jeweils 400 mg Probe werden in einen 10-mL-Messkolben genau eingewogen und mit ca. 8 mL Dichlormethan versetzt. Mit Hilfe eines Schüttlers wird die Probe (am besten über Nacht) gelöst; anschließend wird der Messkolben mit Dichlormethan aufgefüllt und erneut gemischt. 50 µL der so erhaltenen Probelösung werden mit einer Mikroliterspritze in einen Bausch aus silanisierter Glaswatte eingespritzt, der sich in einem TDS-Röhrchen befindet. Das Röhrchen wird für ca. 30 Minuten im Abzug liegengelassen, damit das Lösemittel verdunsten kann.
Externe Standardlösung: 50 mg Hexadecan wird in einen 100-mL-Messkolben genau eingewogen, mit Methanol bis zur Marke aufgefüllt und durch Schütteln homogenisiert. Von dieser Lösung werden 5 µL (entspricht ca. 2,5 µg) auf ein Tenax-Röhrchen aufgegeben. Dieser externe Standard wird zu Beginn und am Ende der Sequenz jeweils einmal gemessen.

Die Bestimmung erfolgte mittels Gaschromatograph Agilent 6890 mit ChemStation-Software; Parameter: Trennsäule Rtx-5; Länge: 60 m; Innendurchmesser: 250 µm; Filmdicke: 0,25 µm; Trägergas: Helium; Säulenvordruck: 203,1 kPa; Ofentemperatur: 50°C- 10°C/min - 320°C (33 min); Split: 50:1; Detektortemperatur: 280 °C (Thermal Aux)). Die Thermodesorptionseinheit ist folgendermaßen eingestellt worden: Gerstel TDSA; TDS-Ofen (Initialtemperatur: 20°C; Equilibrierzeit: 1 min; Initialzeit: 0,5 min; Aufheizrate: 60°C/min; Endtemperatur: 280 °C; Haltezeit: 10 min); Kaltaufgabesystem (Initialtemperatur: -150 °C (mit Flüssig-N₂-Kühlung); Equilibrierzeit: 1 min; Initialzeit: 0,5 min; Aufheizrate: 10°C/s; Endtemperatur: 300°C; Haltezeit: 5 min). Weiterhin wurden eingestellt Transfertemperatur: 300 °C; Desorptionsmodus: Solvent Venting - Dry Purge; Vent-Zeit: 0,5 min; Probenmodus: Röhrchen entfernen (Remove Tube).

Die semiquantitative Auswertung erfolgt gegen den externen Standard Hexadecan. Der Responsefaktor wird mit 1 angenommen. Integriert werden nur die Peakgruppen, die zu den Oligomeren gehören. Dabei eluieren die Dimere um 20 min, die Trimere bei ca. 28 min und die Tetramere um 37 min. Die Zugehörigkeit der Peaks zum integrierten Bereich wird anhand der Massenspektren bestimmt, wobei die Oligomere leicht durch die Ionenmassen m/z = 220, m/z = 330 und m/z = 440 (Di-, Tri- bzw. Tetramer) charakterisiert werden können.

Das Monomer wurde folgendermaßen ermittelt:
Probenvorbereitung: Jeweils 300 mg Probe werden in 6 Headspace-Vials genau eingewogen und mit 5 mL Dodecan versetzt und durch Schütteln homogenisiert. Zwei Ansätze werden als Proben analysiert. Zwei weitere Ansätze werden mit jeweils 5 µL der Aufstocklösung versetzt. Die beiden übrigen Ansätze werden jeweils mit 10 µL Aufstocklösung versetzt. Aufstocklösung: 300 mg Cyclooctan und 40 mg Cycloocten werden in einem 25 mL Meßkolben genau eingewogen und mit Dodecan bis zur Marke aufgefüllt und durch Schütteln homogenisiert. 5 mL dieser Lösung werden in einen 25 mL Meßkolben pipettiert und mit Dodecan bis zur Marke aufgefüllt und durch Schütteln homogenisiert.

Die Bestimmung erfolgte mittels Gaschromatograph Agilent 7890 mit ChemStation-Software; Parameter: Trennsäule 1: Fused silica CP-SIL 8CB; Länge: 50 m; Innendurchmesser: 530 µm; Filmdicke: 1 µm; Trennsäule 2: Fused silica DB-WAX; Länge: 60 m; Innendurchmesser: 530 µm; Filmdicke: 1 µm; Trägergas: Stickstoff; Säulenvordruck: 10,15 psi; Ofentemperatur: 50 °C (4 min) - 5 °C/min - 130 °C - 30 °C/min - 180 °C (10 min); Injektortemperatur: 160°C; Detektortemperatur: 230°C; Detektor H₂-flow: 40 ml/min; Detektor Air-flow: 400 ml/min; Make-up-flow (N₂): 25 ml/min.; Headspace Sampler TurboMatrix 40 Perkin Elmer: Ofentemperatur: 100°C; Nadeltemperatur: 120°C; Transfertemperatur: 150°C; Headspace pressure: 130 kPa; Thermostatisierzeit: 60 min; Druckaufbauzeit:0,5 min; Injektionszeit: 0,16 min: Nadelverweilzeit: 0,2 min; Vial Vent (Entlüften): ja. Die quantitative Auswertung erfolgt nach der Standardadditionsmethode auf beiden Trennsäulen und über beide Aufstockungen mit einem validierten Excel-Sheet.

Der Lösungsparameter δ für die Komponente i ist definiert als δᵢ = (ΔEᵢ^{v} /Vᵢ)^{1/2}. Dabei ist ΔEᵢ^{v} die kohäsive Energiedichte; sie entspricht der Verdampfungsenergie pro cm³ des Lösungsmittels. Vᵢ ist das molare Volumen der Komponente i. Die Dimension von δᵢ ist (cal/ cm³)^{1/2} = 2,046 MPa^{1/2}, siehe Polymer Handbook, Eds. Brandrup, J.; Immergut, E.H.; Grulke, E.A., 4th Edition, John Wiley, New York, 1999, VII /676. Die Zahlenwerte für einzelne Lösungsmittel sind aus Table 7 (VII/ 688-694) bzw. Table 8 (VII/694-697) zu entnehmen.

Bevorzugt werden geeignete Lösemittel 1 ausgewählt aus Hexan, Heptan, Diamylether, Diethylether, Butylbutyrat, Ethylamylketon, Butylacetat, Methylisobutylketon, Methylamylketon, Amylacetat, Ethyln-butyrat, Kohlenstofftetrachlorid, Diethylcarbonat, Propylacetat, Diethylketon, Dimethylether, Toluol, Ethylacetat, Tetrahydrofuran, Benzol, Tetrachloroethylen, Chloroform, Methylethylketon, Chlorbenzol, Dichlormethan, Chlormethan, 1,1,2,2-Tetrachloroethan, Ethylendichlorid oder ihren Mischungen. Besonders bevorzugte Lösemittel 1 sind ausgewählt aus der Gruppe bestehend aus Hexan, Heptan, Toluol, Tetrahydrofuran, Chloroform, Methylethylketon, Dichlormethan, Ethylacetat oder Mischungen daraus, wobei Hexan, Toluol oder ihre Mischungen ganz besonders bevorzugt sind.

Bevorzugt werden geeignete Lösemittel 2 ausgewählt aus Aceton, 1,2-Dichlorobenzol, Kohlenstoffdisulfid, 1,4-Dioxan, Cresol, Anilin, Pyridin, N,N-Dimethylacetamid, Cyclohexanol, Cyclohexanon, Butylalcohol, 2-Butylalcohol, Acetonitrile, Dimethylsulfoxid, N,N-Dimethylformamid, Furfurylalcohol, Propylenglycol, 1,2-Propylencarbonat, Ethanol, Methanol, Propanol, iso-Propanol, Butanole, Ethylenglycol, Ethylencarbonat, Glycerin, Acetonitril, Wasser oder ihren Mischungen. Besonders bevorzugte Lösemittel 2 sind ausgewählt aus der Gruppe bestehend aus Aceton, Isopropanol, Acetonitril, Ethanol, Methanol, Propanol, Butanole, Wasser oder Mischungen daraus, wobei Aceton, Isopropanol oder Mischungen daraus ganz besonders bevorzugt sind.

Das Lösemittelgemisch wird vorzugsweise ein einem Massenverhältnis Lösemittel 1 zu Lösemittel 2 von 95:5 bis 5:95 eingesetzt, wobei Mischungen im Bereich von 45:55 bis 5:95 bevorzugt sind. Je nach Extraktionstemperatur können Anpassungen der Massenverhältnisse nötig sein, um ein optimales Ergebnis im Hinblick auf Extraktionsgeschwindigkeit und Beibehaltung einer stabilen partikulären Struktur des Extraktionsgutes zu erreichen.

Eine besonders bevorzugte Mischung ist Hexan/Aceton oder Hexan/Isopropanol, wobei Hexan/Aceton oder Hexan/ Isopropanol in einer Mischung von45:55 bis 5:95 ganz besonders bevorzugt sind.

Die Umsetzung des oder der Cycloalkene kann ohne Lösemittel betrieben werden. Alternativ kann die Reaktion in mindestens einem Lösemittel durchgeführt werden. Geeignete Lösemittel sind beispielsweise gesättigte aliphatische Kohlenwasserstoffe wie Hexan, Heptan, Octan, Nonan, Decan, Dodecan, Cyclohexan, Cycloheptan oder Cyclooctan; aromatische Kohlenwasserstoffe wie Benzol, Toluol, Xylol oder Mesitylen; halogenierte Kohlenwasserstoffe wie Chlormethan, Dichlormethan, Chloroform oder Tetrachlorkohlenstoff; Ether wie Diethylether, Tetrahydrofuran oder 1,4-Dioxan, Ketone wie Aceton oder Methylethylketon, Ester wie Ethylacetat sowie Mischungen der zuvor genannten Lösemittel. Besonders bevorzugt wird das Lösemittel für die Reaktion ausgewählt aus der Gruppe bestehend aus aliphatischen und aromatischen Kohlenwasserstoffen, hier insbesondere bevorzugt Hexan und Toluol. Des Weiteren sind bevorzugt ausgewählt Tetrahydrofuran, Methylethylketon, Chlormethan, Dichlormethan, Chloroform oder Mischungen daraus, wobei Hexan oder Toluol ganz besonders besonders bevorzugt sind. Der Gehalt an Lösemittel kann beispielsweise auf einen Wert von 20 bis 60 Gew.-%, vorzugsweise von 40 bis 60 Gew.-%, bezogen auf das Gesamtgewicht aus Cycloalken und Lösemittel, eingestellt werden.

Bei der Wahl der Lösemittel für die ringöffnende Metathese-Reaktion ist zu beachten, dass das Lösemittel nicht den Katalysator bzw. die katalytisch aktive Spezies deaktivieren sollte. Dies kann der Fachmann durch einfache Versuche oder durch Studium der Literatur erkennen. Bei Katalysatorsystemen, die Aluminiumorganyle enthalten, sind insesondere aromatische oder aliphatische Kohlenwasserstoffe geeignet, die keine Heteroatome tragen.

In einer weiteren Ausführungsform der Erfindung kann das Lösemittelgemisch einen Stabilisator enthalten. Dieser kann in das Polyalkenamer diffundieren und dessen Lagerstabilität und/oder Verarbeitungsstabilität erhöhen. Geeignete Stabilisatoren können ausgewählt werden aus der Gruppe der sterisch gehinderten Phenole, beispielsweise 2,5-Di-tert-butylhydrochinon, 2,6-Ditert-butyl-p-cresol, 4,4'-Thiobis-(6-tert-butylphenol), 2,2'-Methylen-bis-(4-methyl-6-tertbutylphenol), Octadecyl-3-(3',5'-di-tert-butyl-4'-hydroxyphenyl)propionat, 4,4'-Thiobis-(6-tert-butylphenol), 2-tert-Butyl-6-(3-tert-butyl-2-hydroxy-5-methylbenzyl)-4-methylphenylacrylat, 2,6-Di-(tert-butyl)-4-methylphenol (BHT), 2,2-Methylenbis-(6-tert-butyl-p-cresol), aus der Gruppe der organischen Phosphite, beispielsweise Triphenylphosphit, tris-(Nonylphenyl)phosphit, der Gruppe der organische Thioverbindungen, beispielsweise Dilaurylthiodipropionat, Pentaerythritoltetrakis(3-laurylthiopropionat) und Ascorbinsäure und Mischungen daraus.

Der Stabilisator kann in einem Bereich von 5 bis 7500 ppm, vorzugsweise 25 bis 750 ppm, enthalten sein, jeweils bezogen auf das Gewicht des Polyoctenamers. Zugesetzt werden kann der Stabilisator gemäß einem der folgenden Schritte:
Der Stabilisator kann in die Schmelze des Polymers eingearbeitet werden, beispielsweise über eine Compoundierung in einem Extruder. Dabei kann der Stabilisator sowohl direkt dosiert als auch über ein Masterbatch zugegeben werden. Dies kann auch erst im Zuge einer Weiterverabeitung zu einem Blend mit einem weiteren Polymer und / oder der Herstellung von Formkörpern, beispielsweise Folien, geschehen. Eine andere Möglichkeit besteht darin, den Stabilisator in einem geeigneten Lösemittel zu lösen und auf die Partikel des Polyalkenamers aufzubringen. Anschließend wird das Lösungsmittel entfernt, beispielsweise durch einen Trocknungsschritt, bei dem erhöhte Temperatur und / oder reduzierter Druck eingesetzt werden. Der Stabilisator verbleibt dann auf der Oberfläche der Partikel und / oder zieht während des Trocknens in die Partikel ein. Eine andere Möglichkeit besteht darin, den Stabilisator als Pulverbeschichtung auf die Partikel aufzubringen.

Es ist auch möglich, eine Mischung herzustellen, bei der Polyalkenamer-Partikel, die einen Stabilisator in höherer Konzentration beinhalten, neben Polyalkenamer-Partikeln vorliegen, die keinen Stabilisator oder eine geringere Konzentration an Stabilisator enthalten.

Weiterhin kann die Polyoctenamer-Zusammensetzung Farbstoffe (lösliche Fabmittel) enthalten.

Sofern ein Lösemittel 1 für die genannte Umsetzung der Cycloalkene eingesetzt wird, kann das gleiche Lösemittel oder ein anderes Lösemittel 1 für die Aufarbeitung der Produktmischung eingesetzt werden.

In einer bevorzugten Ausführungsform des erfindungsgemäßen Verfahrens ist das Cycloalken ausgewählt aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon. Cycloocten ist auf Grund der Verfügbarkeit und Handhabbarkeit ein bevorzugtes Cycloalken. Es können mehrere Cycloalkene eingesetzt werden, so dass Copolymere des Polyalkenamers entstehen. Die Cycloalkene können substituiert sein mit Alkylgruppen, Arylgruppen, Alkoxygruppen, Carbonylgruppen. Alkoxycarbonylgruppen und/oder Halogenatomen.

In einer bevorzugten Ausführungsform des erfindungsgemäßen Verfahrens wird die Extraktion durchgeführt in einem Temperaturbereich von 20 °C bis zum Siedebereich des Lösemittelgemisches (Rückfluss), bevorzugt bis 60 °C, besonders bevorzugt im Bereich von 30 °C bis 50 °C und noch stärker bevorzugt im Bereich von 35 °C bis 45 °C. Die Temperatur innerhalb der genannten Wertbereiche ist jedoch limitiert durch den Siedepunkt des Lösemittels sowie die Eigenschaften der Polyalkenamere. Beispielsweise sollte die Temperatur nicht oberhalb des Schmelzpunkts eines semikristallinen Polymers oder der Glasübergangstemperatur eines amorphen Polymers liegen. Grundsätzlich ist es zwar möglich, ein Polyalkenamer im Schmelzezustand zu extrahieren. Dies ist jedoch weniger bevorzugt, da die ursprünglich vorliegenden diskreten Partikel verklumpen bzw. zusammenfließen können. Dadurch verringert sich die Oberfläche des Extraktionsgutes und die Extraktionsgeschwindigkeit sinkt. In der Folge müsste das erhaltende Produkt nach der Extraktion wieder in eine einheitliche partikuläre Form gebracht werden, z.B. durch Granulierung oder Vermahlung.

Die Extraktion kann in verschiedener Form durchgeführt werden, beispielsweise kann das Prinzip der Soxhlet-Extraktion angewendet werden, so dass das zu extrahierende Material semi-kontinuierlich mit frischem Lösungsmittel in Kontakt gebracht wird. Die Extraktion kann auch derart durchgeführt werden, dass z.B. in einem gerührten Kessel die Lösemittelmenge nach einer bestimmten Zeit vollständig oder teilweise gegen eine neue Lösemittelmenge ausgetauscht wird, wobei dies mehrfach wiederholt werden kann. Des Weiteren kann die Extraktion so geführt werden, dass eine Lösungsmittelrückgewinnung integriert ist, wobei die Rückgewinnung sich auf eine oder mehrere Komponenten des Gemischs beziehen kann. Ggf. kann es dann notwendig sein, eine oder mehrere der Komponenten in das Rezyklat nachzudosieren, um das ursprüngliche Mischungsverhältnis wieder herzustellen. Weiterhin kann die Extraktion aber auch derart durchführen, dass sich das Verhältnis der Komponenten im Verlauf der Extraktion ändert, wobei die Änderung stetig oder in Sprüngen erfolgen kann.

Die Extraktion wird bevorzugt unter Inertgas durchgeführt.

Die Temperatur und der Druck kann / können während der Extraktion konstant gehalten werden. Es ist auch denkbar, dass Temperatur oder Druck im Laufe des Extraktionsvorganges variiert werden.

Nach der Extraktion kann die Polyalkenamer-haltige Zusammensetzung beispielsweise durch Abdekantieren oder Filtrieren vom verbleibenden Lösemittel abgetrennt werden. Alternativ oder zusätzlich kann eine Trocknung, beispielsweise unter vermindertem Druck und/ oder erhöhter Temperatur, durchgeführt werden, um das Lösemittel zu entfernen.

Die in a) erhaltene Polyalkenamer-haltige Produktmischung kann in fester Form oder in Lösemittel gelöst vorliegen. Vorzugsweise wird das Lösemittel entfernt. Dies kann beispielsweise durch Erhitzen oder Verringerung des Drucks, beispielsweise mittels Vakuum-Entgasung, vorgenommen werden. Vor der Durchführung des Schritts b) wird die Produktmischung vorzugsweise zu Partikeln granuliert, beispielsweise durch Stranggranulierung oder Unterwassergranulierung, oder pulverisiert, beispielsweise durch Sprühtrocknung oder Vermahlung. In einer bevorzugten Ausführungsform liegt die in a) erhaltene Polyalkenamer-haltige Produktmischung in fester Form vor und wird vor dem Schritt b) zu Partikeln granuliert oder pulverisiert. Bevorzugt ist die mittlere Masse der Partikel kleiner als 100 g / 1000, besonders bevorzugt kleiner als 10 g / 1000 und insbesondere bevorzugt kleiner als 1 g / 1000. Hierbei sind mittlere Massen bis zu einer maximalen Größe von 1000 g / 1000 umfasst.

Zur Bestimmung der mittleren Masse werden ca. 2 - 3 g der Partikel auf eine saubere Unterlage, z. B. ein Blatt Papier, gegeben. Anschließend werden alle Körner dieser Probe ausgezählt und in eine Petrischale überführt; Spieße >1,0 cm Länge oder Granulatketten >1,0 cm werden dabei aussortiert (verworfen) und hier nicht bewertet. Die Anzahl der Granulatkörner wird notiert; sie muss min.150 betragen. Anschließend werden die Granulatkörner auf 0,1 g genau ausgewogen und auf 1000 Granalien bezogen. Wird die Anzahl von 150 Granulatkörnern unterschritten, muss eine neue, entsprechend größere Partikelmenge als Probe herangezogen werden.

Das erfindungsgemäße Verfahren kann kontinuierlich oder diskontinuierlich durchgeführt werden.

Das Polyoctenamer weist vorzugsweise ein gewichtsmittleres Molekulargewicht (Mw) von 5000 g/mol bis 500000 g/mol, bevorzugt von 10000 g/mol bis 250000 g/mol und besonders bevorzugt von 20000 bis 200000 g/mol auf. Das Molekulargewicht wird bestimmt mittels GPC gegen Styrolstandard. Die Messung erfolgt in Anlehnung an DIN 55672-1.

Probenvorbereitung: Die Proben werden mit einem Gehalt von 5 g/L in Tetrahydrofuran bei Raumtemperatur gelöst. Sie werden vor der Injektion in das GPC-System filtriert (Spritzenfilter 0,45 µm). Die Messung erfolgt bei Raumtemperatur.

### Säulenkombination:

1 x 5 cm, 5 µm, 100 A, (Styrol-Divinylbenzol-Copolymer)
1 x 30 cm, 5 µm, 50 A, (Styrol-Divinylbenzol-Copolymer)
1 x 30 cm, 5 µm, 1000 A, (Styrol-Divinylbenzol-Copolymer)
1 x 30 cm, 5 µm, 100000 A, (Styrol-Divinylbenzol-Copolymer)

Mobile Phase: Tetrahydrofuran reinst, stabilisiert
Flussrate: 1 mL/min
Detektion: Brechungsindex-Detektor
Kalibrierung: Polystyrol

Das gewünschte Molgewicht kann beispielsweise in Gegenwart mindestens eines Reglers eingestellt werden, der den Kettenaufbau abbrechen lässt. Geeignete Regler sind beispielsweise acyclische Alkene mit einer oder mehreren nichtkonjugierten Doppelbindungen, die end- oder innenständig liegen können und die vorzugsweise keine Substituenten tragen. Solche Verbindungen sind z.B. Pent-1-en, Hex-1-en, Hept-1-en, Oct-1-en oder Pent-2-en. Des Weiteren können cyclische Verbindungen eingesetzt werden, die in ihrer Seitenkette eine Doppelbindung aufweisen, wie z.B. Vinylcyclohexen.

Das cis/trans-Verhältnis der Cycloalkenamere kann durch dem Fachmann geläufige Methoden eingestellt werden. Beispielsweise ist das Verhältnis abhängig von Katalysatoren, Lösemitteln, Rührintensität oder Temperatur oder Reaktionszeit. Vorzugsweise beträgt der trans-Gehalt mindestens 55%. Das cis-/trans-Verhältnis wird mittels ¹HNMR in Deuterochloroform ermittelt.

Die Umsetzung des Cycloalkens kann in Gegenwart mindestens eines Katalysators erfolgen. Geeignete Katalysatoren sind beispielsweise Übergangsmetallhalogenide, die zusammen mit einer Organometallverbindung als Co-Katalysator die für die Polymerisation katalytisch aktive Spezies. Das Metall der Organometallverbindung unterscheidet sich dabei von dem Übergangsmetall des Halogenids. Alternativ können Übergangsmetall-Carben-Komplexe eingesetzt werden. Als Übergangsmetalle können Metalle der Gruppen 4 bis 8 wie beispielsweise Molybdän, Wolfram, Vanadium, Titan oder Ruthenium in Betracht kommen. Metalle der Organometallverbindung sind beispielsweise Aluminium, Lithium, Zinn, Natrium, Magnesium oder Zink. Geeignete Katalysatoren sowie ihre einzusetzenden Mengen werden beispielsweise in EP-A-2017308 aufgeführt.

Vorzugsweise wird ein Katalysatorsystem eingesetzt, das mindestens ein Alkylaluminiumchlorid, Wolframhexachlorid oder Mischungen enthält. Geeignete Alkylaluminiumchloride sind Ethylaluminiumdichlorid (EtAlCl₂) und Ethylaluminiumsesquichlorid, die auch in Mischungen eingesetzt werden können. Ein bevorzugtes Katalysatorsystem enthält Wolframhexachlorid und Ethylaluminiumdichlorid oder, in einer besonders bevorzugten Ausführungsform, besteht aus diesen beiden Verbindungen. Das Massenverhältnis der Aluminiumchloride zu Wolframhexachlorid ist bevorzugt eins bis sechs. Besonders bevorzugt ist ein Verhältnis von zwei bis fünf. Zur Aktivierung des Katalysators können acide Verbindungen wie Alkohole eingesetzt werden.

Das Wolframhexachlorid kann in einem Bereich von 0,1 bis 0,04 mol-%, besonders bevorzugt von 0,1 bis 0,01 mol-%, bezogen auf das eingesetzte Cycloalken, eingesetzt werden. Die Alkylalummiumchloride liegen vorzugsweise in einem Bereich von 0,2 bis 0,08 mol-%, bevorzugt 0,2 bis 0,02 mol-%, bezogen auf Cycloalken.

Die Umsetzung der Cycloalkene kann sowohl isotherm als auch adiabatisch betrieben werden. Die Temperatur liegt vorzugsweise in einem Bereich zwischen -20 und 120 °C. Dies ist insbesondere abhängig von den eingesetzten Monomeren und einem eventuell vorhandenen Lösemittel. Eine besonders bevorzugte Temperatur liegt im Bereich von 10 bis 60 °C. Die Reaktion findet bevorzugt in einer Schutzgasatomsphäre statt. Bei adiabatischer Verfahrensführung kann die Temperatur über Parameter wie Katalysatormenge, Geschwindigkeit der Katalysatorzugabe, Zeitpunkt des Abbruchs der Reaktion etc. bestimmt werden. Hier liegt der bevorzugte Temperaturbereich bei 20 bis 50 °C.

Die Polymerisation kann nach Erreichen der gewünschten Reaktionszeit durch Inaktivierung des Katalysatorsystems beendet werden. Zu diesem Zweck kann z.B. eine geeignete Menge an CHacider Verbindung zugesetzt werden. Hierzu eignen sich z.B. Alkohole wie Methanol, Ethanol, Propanol etc. als auch Carbonsäuren wie Essigsäure.

Ein weiterer Gegenstand der Erfindung ist eine Polyalkenamer-haltige Zusammensetzung enthaltend mindestens 95 Gew.-% Polyalkenamer, wobei weniger als 20000 ppm an Verunreinigungen enthalten sind, bezogen auf die Polyalkenamer-haltige Zusammensetzung. Bevorzugt sind weniger als 10000 ppm, ganz besonders bevorzugt weniger als 2500 ppm und insbesondere weniger als 1000 ppm an Verunreinigungen enthalten.

In einer bevorzugten Ausführungsform der Erfindung ist das Polyalkenamer Cyclobuten, Cyclopenten, Cyclohepten, Cycloocten, Cyclononen, Cyclodecen, Cyclododecen, Cycloocta-1,5-dien, 1,5Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon.

Die Polyalkenamer-haltige Zusammensetzung kann mit einem Matrixharz vermischt sein. Diese Mischung kann beispielsweise 1 bis 30 Gew.-% der Zusammensetzung und 70 bis 99 Gew.-% der Matrix enthalten. Geeignete Matrixharze werden zum Beispiel in EP-A-2017308 erwähnt.

Vorzugsweise wird die genannte Polyalkenamer-haltige Zusammensetzung hergestellt durch das oben detailliert beschriebene Verfahren.

Ebenfalls Gegenstand der Erfindung ist die Verwendung mindestens einer erfindungsgemäßen Polyalkenamer-haltigen Zusammensetzung oder mindestens einer nach dem erfindungsgemäßen Verfahren erhaltenen Zusammensetzung in Verpackungsmaterialien, wobei die Verpackungsmaterialien vorzugsweise für Lebensmittel verwendet werden.

## Patentansprüche

1. Verfahren zur Herstellung einer Polyalkenamer-haltigen Zusammensetzung, umfassend die Schritte:
a) Umsetzen mindestens eines Cycloalkens durch ringöffnende, metathetische Polymerisation unter Erhalt einer Polyalkenamer-haltigen Produktmischung, und
b) Aufarbeiten der Produktmischung zur Entfernung der Monomere und der Oligomere der Cycloalkene unter Erhalt der Polyalkenamer-haltigen Zusammensetzung,
**dadurch gekennzeichnet, dass** Schritt b) durch Extraktion in einem Lösemittelgemisch umfassend mindestens ein Lösemittel 1 und mindestens ein Lösemittel 2 erfolgt, wobei der Lösungsparameter δ der Lösemittel 1 maximal 9,8 (cal/cm³)^{1/2} und der Lösungsparameter δ der Lösemittel 2 mindestens 9,9 (cal/cm³)^{1/2} betragen.

2. Verfahren nach Anspruch 1, **dadurch gekennzeichnet, dass** die Lösemittel 1 zu den Lösemitteln 2 in einem Massenverhältnis von 95:5 bis 5:95, vorzugsweise 45:55 bis 5:95, eingesetzt werden.

3. Verfahren nach einem der vorherigen Ansprüche, **dadurch gekennzeichnet, dass** das Cycloalken ausgewählt ist aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon.

4. Verfahren nach einem der vorherigen Ansprüche, **dadurch gekennzeichnet, dass** das Lösemittel 1 ausgewählt ist aus der Gruppe bestehend aus Hexan, Heptan, Diamylether, Diethylether, Butylbutyrat, Ethylamylketon, Butylacetat, Methylisobutylketon, Methylamylke-ton, Amylacetat, Ethyl-n-butyrat, Kohlenstofftetrachlorid, Diethylcarbonat, Propylacetat, Diethylketon, Dimethylether, Toluol, Ethylacetat, Tetrahydrofuran, Benzol, Tetrachloroethylen, Chloroform, Methylethylketon, Chlorbenzol, Dichlormethan, Chlormethan, 1,1,2,2-Tetrachloroethan, Ethylendichlorid oder ihren Mischungen, vorzugsweise aus Hexan, Heptan, Toluol, Tetrahydrofuran, Chloroform, Methylethylketon, Dichlormethan, Ethylacetat oder Mischungen daraus.

5. Verfahren nach einem der vorherigen Ansprüche, **dadurch gekennzeichnet, dass** das Lösemittel 2 ausgewählt ist aus der Gruppe bestehend aus Aceton, 1,2-Dichlorobenzol, Kohlenstoffdisulfid, 1,4-Dioxan, Cresol, Anilin, Pyridin, N,N-Dimethylacetamid, Cyclohexanol, Cyclohexanon, Butylalcohol, 2-Butylalcohol, Acetonitrile, Dimethylsulfoxid, N,N-Dimethylformamid, Furfurylalcohol, Propylenglycol, 1,2-Propylencarbonat, Ethanol, Methanol, Propanol, iso-Propanol, Butanole, Ethylenglycol, Ethylencarbonat, Glycerin, Acetonitril, Wasser oder ihren Mischungen, vorzugswese aus Aceton, Isopropanol, Acetonitril, Ethanol, Methanol, Propanol, Butanole, Wasser oder Mischungen daraus.

6. Verfahren nach einem oder mehreren der vorhergehenden Ansprüche, **dadurch gekennzeichnet, dass** die Extraktion durchgeführt wird in einem Temperaturbereich von 20 °C bis zum Siedebereich des Lösemittelgemisches.

7. Verfahren nach einem oder mehreren der vorhergehenden Ansprüche, **dadurch gekennzeichnet, dass** die in a) erhaltene Polyalkenamer-haltige Produktmischung in fester Form vorliegt und vor dem Schritt b) zu Partikeln granuliert oder pulverisiert wird.

8. Verfahren nach einem oder mehreren der vorhergehenden Ansprüche, **dadurch gekennzeichnet, dass** die in a) erhaltene Polyalkenamer-haltige Produktmischung vor dem Schritt b) einer Vakuum-Entgasung unterzogen wird.

9. Verfahren nach einem der vorherigen Ansprüche, **dadurch gekennzeichnet, dass** die Umsetzung von Cycloalkenen in Gegenwart eines Katalysators, vorzugsweise enthaltend mindestens enthaltend mindestens ein Übergangsmetallhalogenid und eine Organometallverbindung oder enthaltend mindestens einen Übergangsmetall-Carben-Komplex erfolgt.

10. Verfahren nach einem der vorherigen Ansprüche, **dadurch gekennzeichnet, dass** die Umsetzung von Cycloalkenen in Gegenwart eines Reglers, vorzugsweise in Gegenwart von acyclischen Alkenen als Regler mit einer oder mehreren nichtkonjugierten Doppelbindungen, oder cyclische Verbindungen, die in ihrer Seitenkette eine Doppelbindung aufweisen, erfolgt.

11. Verfahren nach einem der vorherigen Ansprüche, **dadurch gekennzeichnet, dass** das Lösemittelgemisch mindestens einen Stabilisator enthält.

12. Polyalkenamer-haltige Zusammensetzung enthaltend mindestens 95 Gew.-% Polyalkenamer, **dadurch gekennzeichnet, dass** weniger als 20000 ppm an Monomeren und Oligomeren der Cycloalkene enthalten sind, bezogen auf die Polyalkenamer-haltige Zusammensetzung.

13. Polyalkenamer-haltige Zusammensetzung nach Anspruch 13, **dadurch gekennzeichnet, dass** das Polyalkenamer ausgewählt ist aus der Gruppe bestehend aus aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon.

14. Verwendung mindestens einer Polyalkenamer-haltigen Zusammensetzung nach einem der Ansprüche 12 oder 13 in Verpackungsmaterialien.

15. Verwendung nach Anspruch 14, **dadurch gekennzeichnet, dass** die Verpackungsmaterialien für Lebensmittel verwendet werden.
